# EUROPÄISCHE PATENTSCHRIFT

(11) **EP 1 037 351 B1**
(45) Veröffentlichungstag und Bekanntmachung des Hinweises auf die Patenterteilung: **08.09.2010**
(21) Anmeldenummer: 00104875.0
(22) Anmeldetag: 07.03.2000
(51) Int. Cl.: H02G 3/10

(54) **Halterahmen zur Festlegung eines Bauteils an einer Wand**
Plate for supporting a component on a wall
Plaque de support d'un composant sur un mur

(30) Priorität: 11.03.1999 DE 19910987
(43) Veröffentlichungstag der Anmeldung: 20.09.2000
(73) Patentinhaber: Tenovis GmbH & Co. KG, 60362 Frankfurt am Main (DE)
(72) Erfinder: Kraemer, Dieter, 65510 Idstein (DE); Lauer, Walter, 65929 Frankfurt (DE); Ogorczyk, Bernd, 61184 Karben (DE); Beck, Werner, 64287 Darmstadt (DE)
(74) Vertreter: Tergau & Pohl Patentanwälte

(56) Entgegenhaltungen:
- US-A- 3 919 458
- US-A- 4 140 293
- US-A- 5 749 669

## Beschreibung

### Stand der Technik

Die Erfindung betrifft einen Halterahmen zur Festlegung eines Bauteils, insbesondere einer Fernmeldevermittlungsanlage an einer Wand, mit den im Oberbegriff des Anspruchs 1 angegebenen Merkmalen.

Bekannte Halterahmen zur Festlegung von Bauteilen, wie beispielsweise elektrischen/elektronischen Geräten, werden in der Regel mit mehreren Schrauben an einer Wand festgelegt. Bei einer Befestigung des Halterahmens mit nur einer Schraube bestand bisher der Nachteil, daß der Halterahmen nicht verdrehsicher an der Wand festgelegt werden konnte. Dies ist insbesondere nachteilig, wenn das Bauteil ein größeres Gerät ist, beispielsweise eine Fernmeldevermittlungsanlage. Der Halterahmen der Anlage muß verdrehsicher an der Wand befestigt werden, damit sich die Anlage beim Umbau oder Ausbau und beim Einstecken von Teilnehmeranschlüssen an der Wand nicht drehen kann. Dies ist bei den bekannten Halterahmen nur dadurch erreichbar, daß der Halterahmen mit wenigstens zwei Schrauben an der Wand befestigt wird.

### Vorteile der Erfindung

Der erfindungsgemäße Halterahmen mit den kennzeichnenden Merkmalen des Anspruchs 1 ermöglicht es, Bauteile mit nur einem schraubbaren Befestigungsmittel verdrehsicher an einer Wand festzulegen. Vorteilhaft kann der Halterahmen mit wenigen Handgriffen sehr schnell an der Wand befestigt werden. Da nur ein einziges schraubbares Befestigungsmittel vorgesehen ist, muß auch nur ein Loch in die Wand gebohrt werden. Mit dem erfindungsgemäßen Halterahmen lassen sich auch größere elektrische/elektronische Anlagen, wie beispielsweise Fernmeldevermittlungsanlagen, bequem und gegen ein Verdrehen geschützt an einer Wand festlegen. Dies wird in einfacher Weise dadurch erreicht, daß an dem Halterahmen nur eine Öffnung zur Einführung eines einzigen schraubbaren Befestigungsmittel vorgesehen ist und daß in einem Abstand von der einen Öffnung wenigstens eine Kralle vom Halterahmen zur Wand hin absteht, die durch Anziehen des schraubbaren Befestigungsmittels unter Vorspannung gegen die Wand angedrückt wird.

Dabei sind mehrere Krallen vorgesehen, die sich in bezug auf die eine Öffnung gegenüberliegen und konzentrisch um die eine Öffnung herum angeordnet sind. Bei der Festlegung des Halterahmens werden die Krallen dann mit der gleichen Vorspannung gegen die Wand gepreßt. Hierdurch wird ein noch besserer Verdrehschutz des Halterahmens erreicht.

Eine zur Wand hin abstehende Ausprägung ist konzentrisch zu der einen Öffnung in die Montageplatte eingebracht, wobei die Krallen von der Ausprägung zur Wand hin abstehen. Hierdurch wird sichergestellt, daß bei Festlegung des Halterahmens zuerst die Krallen die Wand berühren.

Der Halterahmen ist zudem preisgünstig in einfacher Weise als Stanzbiegeteil aus Metall gefertigt, wobei die von dem Halterahmen abstehenden Krallen einstückig mit dem Halterahmen verbunden sind und durch Ausstanzen und Umbiegen an dem Halterahmen ausgebildet sind. Die Krallen können dann vorteilhaft direkt bei der Herstellung des Halterahmens durch Stanzen und Umbiegen mit angefertigt werden.

Vorteilhafte Ausgestaltungen und Weiterbildungen der Erfindung werden durch die in den Unteransprüchen angegebenen Merkmale ermöglicht.

Vorteilhaft weisen die zur Wand hin abstehenden Krallen einen sich ausgehend von dem Halterahmen zur Wand hin verjüngenden, spitz zulaufenden Querschnitt auf. Der Verdrehschutz kann noch dadurch verbessert werden, daß die Flanken der Krallen scharfkantig ausgebildet sind. Bedingt durch die Vorspannung dringen die spitzen, scharfen Krallen etwas in die Oberfläche der Wand ein, so daß der Halterahmen nur noch unter Aufbietung sehr großer Kräfte um das eine schraubbare Befestigungsmittel gedreht werden kann.

Vorteilhaft ist die eine Öffnung mittig in einer zur Auflage an der Wand bestimmten Montageplatte des Halterahmens ausgebildet.

Die Ausprägung kann kreisringförmig ausgebildet sein. Hierdurch wird vorteilhaft eine Versteifung der Montageplatte erreicht und verhindert, daß sich die Krallen von der Wand zurückbiegen, beziehungsweise mit nicht ausreichend großer Vorspannung gegen die Wand angedrückt werden.

### Zeichnungen

Ein Ausführungsbeispiel der Erfindung ist in den Zeichnungen dargestellt und wird in der nachfolgenden Beschreibung näher erläutert. Es zeigt
Fig. 1 einen Querschnitt durch einen an einer Wand befestigten erfindungsgemäßen Halterahmen mit einem an dem Halterahmen angeordneten Gerät,
Fig. 2 eine Draufsicht auf die der Wand zuwandte Seite des Halterahmens.

### Beschreibung eines Ausführungsbeispiels

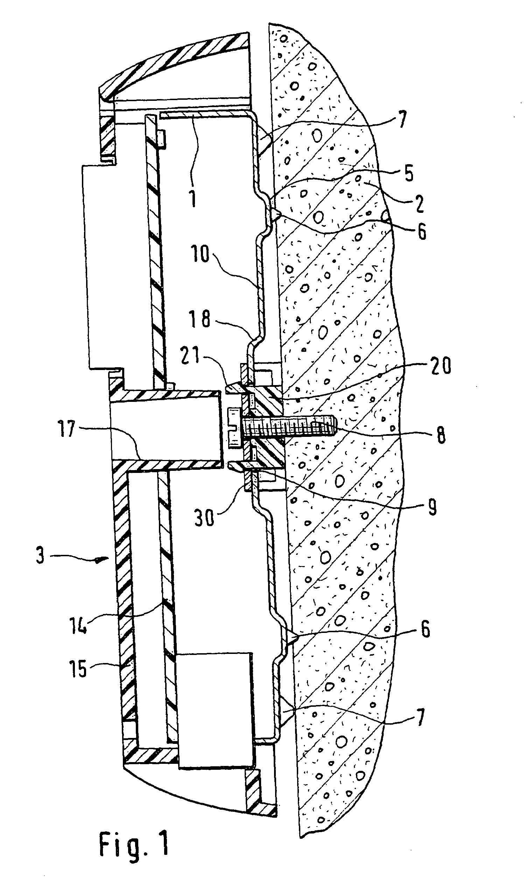

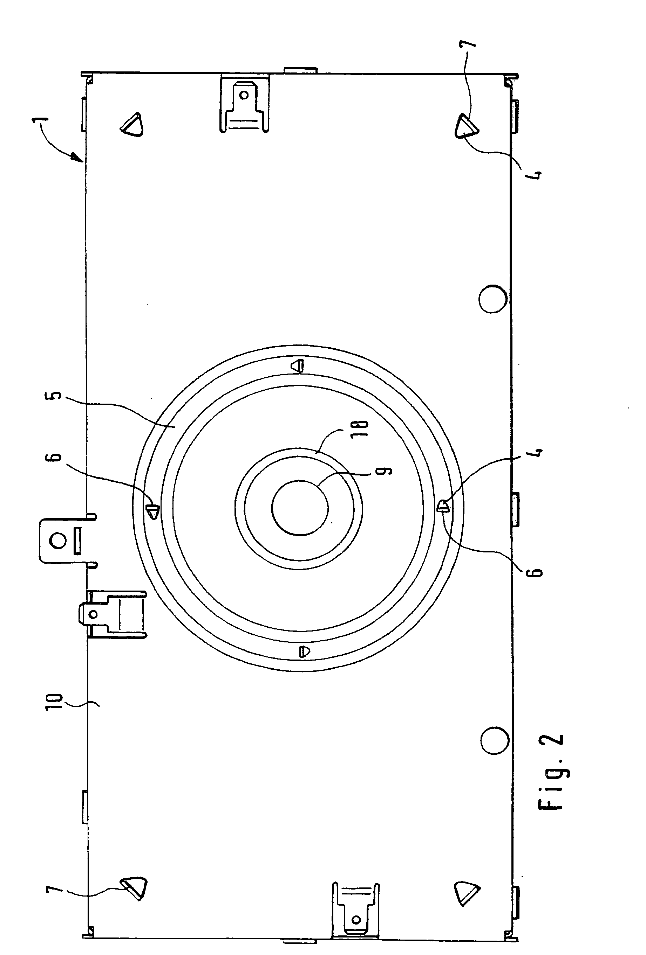

In Fig. 1 und Fig. 2 ist eine erfindungsgemäßer Halterahmen 1 dargestellt, welcher als metallisches Stanzbiegeteil ausgebildet ist. Wie in Fig. 1 zu erkennen ist, bildet der Halterahmen in diesem Ausführungsbeispiel zugleich den Gehäuseboden eines Gerätes 3, welches beispielsweise eine Fernmeldevermittlungsanlage sein kann. Eine Frontkappe 15 des Gerätegehäuses ist mit nicht dargestellten Rastmitteln an dem Halterahmen 1 festgelegt. Zwischen Halterahmen 1 und Frontkappe 15 ist eine mit elektrischen/elektronischen Bauelementen versehene Leiterplatte 14 angeordnet. Der Halterahmen kann aber auch zur Festlegung beliebiger anderer Bauteile an einer Wand verwandt werden. Auch muß der Halterahmen nicht notwendiger Weise als Gehäuseteil ausgebildet sein. Auch ist denkbar mehrere Bauteile an dem Halterahmen festzulegen.

Wie in Fig. 1 und Fig. 2 zu erkennen ist, umfaßt der Haltrahmen 1 einer rechteckförmige Montageplatte 10, welche zur Auflage an der Wand 2 bestimmt ist. In die Montageplatte 10 ist eine zentrale Öffnung 9 zur Einführung des einzigen vorgesehenen schraubbaren Befestigungsmittels 8 eingebracht. Das Befestigungsmittel 8 kann als Schraube mit Schraubenkopf oder Gewindestift mit Schraubenmutter oder anderes schraubbares Befestigungsmittel ausgebildet sein. Die Öffnung 9 befindet sich in diesem Ausführungsbeispiel im Schnittpunkt der Diagonalen der rechteckförmigen Montageplatte 10, ist also mittig in der Montageplatte angeordnet. Es ist aber auch möglich, die Öffnung 9 etwas versetzt zur geometrischen Mitte der Montageplatte anzuordnen. Wie weiterhin in Fig. 2 zu erkennen ist, ist die Öffnung 9 von einer kreisringförmigen Ausprägung 5 oder Auswölbung konzentrisch umgeben, welche von der Montageplatte 10 zur Wand 2 hin absteht. In der kreisringförmigen Ausprägung 5 sind vier sich in bezug auf die Öffnung 9 gegenüberliegende Krallen 6 angeordnet, die von der Ausprägung 5 zur Wand 2 hin abstehen. Die Ausprägung erhöht die Steifheit der Montageplatte 10, ist aber nicht unbedingt erforderlich. Darüber hinaus können natürlich auch nur zwei oder drei oder mehr als vier Krallen in der Montageplatte 10 konzentrisch zu der Öffnung 9 angeordnet werden. Die Krallen 6 sind in diesem Ausführungsbeispiel durch Stanzen und Biegen in der Montageplatte 10 ausgebildet. Wie insbesondere in Fig. 2 zu erkennen ist, werden die Krallen 6 durch Stanzen eines V-förmigen Schlitzes 4 und anschließendes rechtwinkliges Umbiegen der ausgestanzten Kontur hergestellt, so daß sie eine ausgehend von der Montageplatte 10 zur Wand 2 hin spitz zulaufende Kontur mit scharfen durch den Stanzvorgang hergestellten Flanken aufweisen. Wie nun in Fig. 1 zu erkennen ist, wird bei der Festlegung des Halterahmens 1 an der Wand 2 eine Unterlegscheibe 30 auf die Öffnung 9 aufgelegt und anschließend die Schraube 8 durch eine Ausnehmung der Unterlegscheibe 30 und die Öffnung 9 hindurch in die Wand 2 eingeschraubt. Die Unterlegscheibe 30 ist nicht unbedingt erforderlich. So kann beispielsweise auf die Unterlegscheibe 30 verzichtet werden und statt dessen der Durchmesser der Öffnung 9 verringert werden, so daß sich der Schraubenkopf der Schraube 8 beim Festschrauben unmittelbar an die Montageplatte 10 andrückt. Eine Öffnung 17 in der Frontkappe 15 dient zur Einführung eines Schraubers beim Festlegen oder Lösen der Schraube 8. Wie in Fig. 1 weiterhin zu erkennen ist, ist zwischen der Montageplatte 10 und der Wand 2 in diesem Ausführungsbeispiel zusätzlich noch ein Abstandshalter 20 angeordnet. Rasthaken 21 des Abstandshalters 20 sind durch die Öffnung 9 hindurch mit der Unterlegscheibe 30 verbunden. Der genaue Aufbau und die Funktion des Abstandshalters 20 sind in der deutschen Offenlegungsschrift DE 196 03 751 A1 und dem US-Patent US 5 749 669 beschrieben, so daß hier nicht näher darauf eingegangen werden muß. Der Halterahmen 1 kann aber auch ohne den Abstandshalter 20 direkt an der Wand 2 befestigt werden. Wie in Fig. 1 weiterhin zu erkennen ist, werden die Krallen 6 beim Anziehen der Schraube 8 gegen die Wand 2 vorgespannt und dringen mit ihren Spitzen ein Stück in die Wand ein, wodurch ein Verdrehschutz für den Halterahmen 1 ausgebildet wird. Der Abstandshalter 20 ist hierbei in einer Versenkung 18 der Montageplatte 10 angeordnet. Die Tiefe der Versenkung 18, die Höhe des Abstandshalters sowie die Höhe der Ausprägung 5 und Krallen 6 sind dabei so aufeinander abgestimmt, daß die Krallen gerade ein Stück in die Wand 2 eindringen können, wenn sich der Schraubenkopf der Schraube 8 an die Unterlegscheibe 30 anlegt und dadurch die Montageplatte 10 gegen den Abstandshalter 20 anpreßt wird.

Wie in Fig. 1 und Fig. 2 dargestellt ist, sind an der Montagefläche 10 im äußeren Randbereich außerhalb der Ausprägung 5 noch weitere Krallen 7 vorgesehen, welche in gleicher Weise wie die Krallen 6, nur etwa größer ausgebildet sind. Wie insbesondere in Fig. 1 zu erkennen ist, dienen diese Krallen aber weniger als Verdrehschutz, da beim Anziehen der Schraube 8 zunächst die weiter innen liegenden Krallen 6 gegen die Wand vorgespannt werden. Die Krallen 7 dienen daher eher als Abstandhalter, um die Montageplatte 10 auch in den äußeren Randbereichen in einem definierten Abstand zur Wand 2 zu halten.

## Patentansprüche

1. Halterahmen zur Festlegung eines Bauteils, insbesondere eines elektrischen/elektronischen Gerätes, an einer Wand, welcher Halterahmen mit schraubbaren Befestigungsmitteln (8) an der Wand (2) festlegbar ist, wobei zur Festlegung des Halterahmens (1) ein einziges, durch eine Öffnung (9) des Halterahmens (1) in die Wand (2) einschraubbares Befestigungsmittel (8) vorgesehen ist, wobei als Verdrehschutz wenigstens eine in einem Abstand zur der einen Öffnung (9) angeordnete Kralle (6,7) vom Halterahmen (1) zur Wand (2) hin absteht, die bei der Festlegung des Halterahmens (1) unter Vorspannung gegen die Wand (2) gepreßt wird,
wenigstens zwei Krallen (6) an dem Halterahmen (1) angeordnet sind, die sich in bezug auf die Öffnung (9) gegenüberliegen und
konzentrisch um die Öffnung (9) herum angeordnet sind,
**dadurch gekennzeichnet, daß** der Halterahmen (1) eine Montageplatte (10) zur Auflage an der Wand (2) aufweist, an welcher die Krallen (6,7) angeordnet sind und daß die Öffnung (9) mittig in der Montageplatte (10) angeordnet ist,
eine zur Wand (2) hin abstehende Ausprägung (5) konzentrisch zu der einen Öffnung (9) in die Montageplatte (10) eingebracht ist, daß die Krallen (6) an der Ausprägung (5) angeordnet sind und
daß der Halterahmen (1) als Stanzbiegeteil aus Metall gefertigt ist und daß die von dem Halterahmen (1) abstehenden Krallen (6,7) einstückig mit dem Halterahmen verbunden sind und durch Ausstanzen und Umbiegen an dem Halterahmen ausgebildet sind.

2. Halterahmen nach Anspruch 1, **dadurch gekennzeichnet, daß** die zur Wand hin abstehenden Krallen (6,7) einen sich ausgehend von dem Halterahmen (1) zur Wand (2) hin verjüngenden, spitz zulaufenden Querschnitt aufweisen.

3. Halterahmen nach Anspruch 2, **dadurch gekennzeichnet, daß** die Flanken der Krallen (6,7) scharfkantig ausgebildet sind.

4. Halterahmen nach einem des Ansprüche 1 bis 3, **dadurch gekennzeichnet, daß** die Ausprägung (5) kreisringförmig ausgebildet ist.

## Claims

1. A holding frame for fixing a component, in particular an electric/electronic device, on a wall, said holding frame being fixable on the wall (2) by screw-on fastening means (8), wherein one single fastening means (8), which can be screwed into the wall (2) through an opening (9) of the holding frame (1), is provided for fixing the holding frame (1), wherein, as an antitwist protection, at least one spike (6, 7), arranged at a distance from the one opening (9), projects from the holding frame (1) towards the wall (2) and is pressed against the wall (2) under prestress when the holding frame (1) is fixed, at least two spikes (6) opposite each other in relation to the opening (9) are arranged on the holding frame (1), and arranged concentrically around the opening (9),
**characterized in that** the holding frame (1) includes a mounting plate (10) to rest against the wall (2), on which the spikes (6, 7) are arranged, and **in that** the opening (9) is arranged centrically in the mounting plate (10), **in that** a recess (5) projecting towards the wall (2) is formed into the mounting plate (10) concentrically to the one opening (9), **in that** the spikes (6) are arranged on the recess (5), and **in that** the holding frame (1) is made from metal as a stamped bent component, and **in that** the spikes (6, 7) projecting from the holding frame (1) are integrally connected with the holding frame and are formed on the holding frame by stamping out and bending over.

2. The holding frame of claim 1,
**characterized in that** the spikes (6, 7) projecting towards the wall have a pointed cross-section tapering in the direction from the holding frame (1) to the wall (2).

3. The holding frame of claim 2,
**characterized in that** the flanks of the spikes (6, 7) are sharp-edged.

4. The holding frame of any of claims 1 to 3,
**characterized in that** the recess (5) has the shape of a circular ring.

## Revendications

1. Cadre de support pour fixer un composant, en particulier un dispositif électrique/électronique, sur un mur, dit cadre de support étant fixable sur le mur (2) par des moyens de fixation à vis (8), dans lequel un seul moyen de fixation (8), qui peut être vissé dans le mur (2) à travers un orifice (9) du cadre de support (1), est prévu pour fixer le cadre de support (1), dans lequel, en tant que protection antitorsion, au moins une griffe (6, 7), ménagée à une distance du seul orifice (9), fait saillie du cadre de support (1) vers le mur (2) et est pressée contre le mur (2) sous précontrainte lorsque le cadre de support (1) est fixé, au moins deux griffes (6) opposées l'une à l'autre par rapport à l'orifice (9) sont ménagées sur le cadre de support (1) et ménagées de façon concentrique autour de l'orifice (9), **caractérisé en ce que** le cadre de support (1) comprend une plaque de montage (10) à s'appuyer contre le mur (2), sur laquelle les griffes (6, 7) sont ménagées, et **en ce que** l'orifice (9) est ménagé de façon centrique dans la plaque de montage (10), **en ce qu'**un creux (5) faisant sailliee vers le mur (2) est formé dans la plaque de montage (10) de façon concentrique par rapport au seul orifice (9), **en ce que** les griffes (6) sont ménagées sur le creux (5), et **en ce que** le cadre de support (1) est fait de métal comme un composant découpé et plié, et **en ce que** les griffes (6, 7) faisant saillie du cadre de support (1) sont solidarisées avec le cadre de support et sont formées sur le cadre de support par découpage et pliage.

2. Cadre de support selon la revendication 1,
**caractérisé en ce que** les griffes (6, 7) faisant saillie vers le mur ont une section pointue décroissante dans la direction du cadre de support (1) au le mur (2).

3. Cadre de support selon la revendication 2,
**caractérisé en ce que** les flancs des griffes (6, 7) ont des arêtes vives.

4. Cadre de support selon l'une quelconque des revendications 1 à 3, **caractérisé en ce que** le creux (5) a la forme d'un anneau de cercle.
